# EUROPEAN PATENT APPLICATION

(11) **EP 4 693 648 A1**
(43) Date of publication of application: **11.02.2026**
(21) Application number: 24223202.3
(22) Date of filing: 24.12.2024
(51) Int. Cl.: H01M 50/209, H01M 50/392, H01M 10/48, H01M 50/502, H01M 50/569

(54) **BATTERY PACK**

(30) Priority: 08.08.2024 CN 202421927529 U; 24.09.2024 WO PCT/CN2024/120789
(71) Applicant: Eve Energy Storage Co., Ltd, Wuhan, Hubei 430000 (CN)
(72) Inventor: ZUO, Ding, WUHAN, 430000 (CN); FENG, Chaojun, WUHAN, 430000 (CN); FAN, Shilin, WUHAN, 430000 (CN); WANG, Xuxing, WUHAN, 430000 (CN); LIU, Huiguang, WUHAN, 430000 (CN); HU, Xinjie, WUHAN, 430000 (CN)
(74) Representative: Regimbeau

(57) **Abstract**

Provide is a battery pack, which relates to the field of battery technology. The battery pack includes a battery module (1) and a cells contact system, CCS, acquisition component (2). The CCS acquisition component (2) includes a busbar (21), an acquisition wiring harness (22), and a first foam (23). The busbar (21) is configured to be connected to the battery module (1). The acquisition wiring harness (22) is connected to the busbar (21). The first foam (23) is disposed on the battery module (1). The first foam (23) includes a body portion (231) and a first connecting portion (232). An explosion-proof valve of each cell in the battery module (1) corresponds to a respective first communication opening (233) formed in the body portion (231). The first connecting portion (232) is configured to rotate to buffer and absorb an electrolyte ejected by the explosion-proof valve.

## Description

### TECHNICAL FIELD

The present application relates to the field of battery technology, for example, a battery pack.

### BACKGROUND

In the event of thermal runaway, a battery rapidly releases its stored electrical and chemical energy, causing the internal electrolyte and chemicals to decompose quickly and generate a large amount of gas, leading to a sharp increase in internal pressure. To ensure the safety of new energy vehicles during use, a cells contact system (CCS) signal acquisition component is used to transmit signals between the battery and the battery management system in the battery module. Additionally, to prevent the battery from exploding due to excessive internal pressure, the battery is often equipped with an explosion-proof valve designed to release pressure.

However, when the batteries are assembled into a battery module, the explosion-proof valve is exposed. As a result, when a battery undergoes thermal runaway, the high-temperature electrolyte released after the explosion of the valve can affect neighboring batteries and may even spill onto the CCS signal acquisition component, potentially impacting the use of the entire CCS signal acquisition component and creating a safety hazard during the use of the battery module.

### SUMMARY

The present application provides a battery pack having a simple structure. The battery pack can absorb an electrolyte by using a first foam, ensuring the safety of both a CCS component and the overall battery pack during use.

Provided is a battery pack. The battery pack includes a battery module and a CCS acquisition component. The CCS acquisition component includes a busbar, an acquisition wiring harness, and a first foam. The busbar is configured to be connected to the battery module. The acquisition wiring harness is connected to the busbar. The first foam is disposed on the battery module. The first foam includes a body portion and first connecting portions. An explosion-proof valve of each cell in the battery module corresponds to a respective first communication opening formed in the body portion. Each first connecting portion is disposed inside a first communication opening. Each first connecting portion has a connecting end that is connected to the wall of the first communication opening and a free end that is spaced from the wall of the first communication opening. The free end is configured to rotate along the connecting end to buffer and absorb an electrolyte ejected by the explosion-proof valve.

The beneficial effects of the present application are as follows: With the arrangement of the first foam, the electrolyte leaked from the explosion-proof valve of the battery module can be partially blocked and absorbed, reducing the occurrence of electrolyte splashing from some batteries onto adjacent batteries, which may affect their normal operation. Additionally, the arrangement helps reduce the corrosion of the CCS acquisition component caused by electrolyte leakage, thereby better protecting electrical components and improving the safety of the CCS acquisition component and the overall battery module during use. Furthermore, the arrangement where the free end is spaced from the wall of the first communication opening and can rotate around the connecting end allows the free end to rotate around the connecting end upon impact from the electrolyte at the moment of the explosion-proof valve's rupture. During this rotation, the free end blocks, buffers, and absorbs the ejected electrolyte, reducing the occurrence of electrolyte splashing onto other batteries.

### BRIEF DESCRIPTION OF DRAWINGS

FIG. 1 is a diagram illustrating the structure of a battery pack according to an embodiment of the present application.
FIG. 2 is a diagram illustrating the structure of a battery pack according to an embodiment of the present application.
FIG. 3 is a diagram illustrating the structure of a CCS acquisition component according to an embodiment of the present application.
FIG. 4 is an enlarged view of A of FIG. 3.
FIG. 5 is an enlarged view of B of FIG. 4.

### Reference list

1. battery module; 11. cell; 2. CCS acquisition component; 21. busbar; 211. adhesive slot; 22. acquisition wiring harness; 221. connector; 222. acquisition wire; 2221. body portion; 2222. acquisition portion; 223. acquisition terminal; 23. first foam; 231. body portion; 232. first connecting portion; 2321. connecting end; 2322. free end; 233. first communication opening; 24. fixing plate; 241. second communication opening; 242. cable tie hole; 243. fourth communication opening; 25. second foam; 251. third communication opening

### DETAILED DESCRIPTION

The present application is described below in conjunction with drawings and embodiments. The embodiments described herein are intended to explain the present application and not to limit the present application. Additionally, it is to be noted that for ease of description, only part, not all, of structures related to the present application are illustrated in the drawings.

In the description of the present application, terms "joined", "connected", and "fixed" are to be understood in a broad sense unless otherwise expressly specified and limited. For example, the term "connected" may refer to "fixedly connected", "detachably connected", or integrated, may refer to "mechanically connected" or "electrically connected", or may refer to "connected directly", "connected indirectly through an intermediary", "connected inside two elements", or an "interaction relation between two elements". For those of ordinary skill in the art, meanings of the preceding terms in the present application may be understood based on situations.

In the present application, unless otherwise expressly specified and limited, when a first feature is described as "on" or "under" a second feature, the first feature and the second feature may be in direct contact or may be in indirect contact via another feature between the two features instead of being in direct contact. Moreover, when the first feature is described as "on", "above", or "over" the second feature, the first feature is right on, above, or over the second feature, the first feature is obliquely on, above, or over the second feature, or the first feature is at a higher level than the second feature. When the first feature is described as "under", "below", or "underneath" the second feature, the first feature is right under, below, or underneath the second feature, the first feature is obliquely under, below, or underneath the second feature, or the first feature is at a lower level than the second feature.

In the description of the present application, it should be noted that the orientations or position relations indicated by terms such as "above", "below", "right" and the like are based on orientations or position relations shown in the drawings. These orientations or position relations are intended only to facilitate and simplify description of the present application, and not to indicate or imply that a device or element referred to must have such particular orientations or must be configured or operated in such particular orientations. Thus, these orientations or position relations are not to be construed as limiting the present application. In addition, the terms "first" and "second" are used for distinguishing between descriptions and have no special meanings.

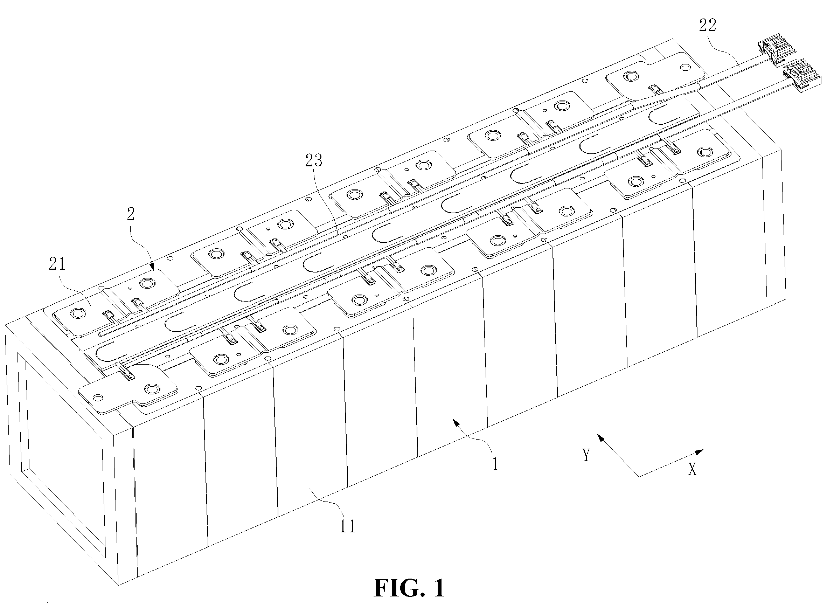

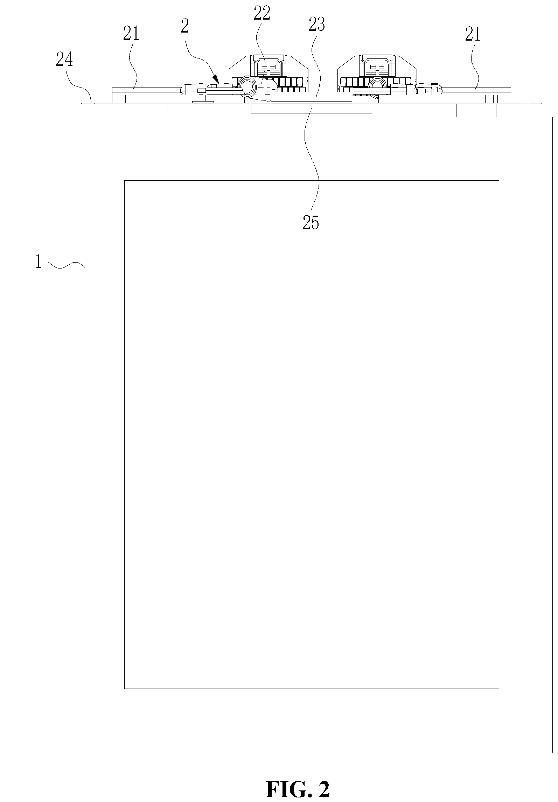

As shown in FIGS. 1 to 5, the battery pack of this embodiment of the present application includes a battery module 1 and a CCS acquisition component 2. The CCS acquisition component 2 includes a busbar 21, an acquisition wiring harness 22, and a first foam 23. The busbar 21 is configured to be connected to the battery module 1. The acquisition wiring harness 22 is connected to the busbar 21. The first foam 23 is disposed on the battery module 1 and configured to absorb the electrolyte leaked from the explosion-proof valve of a respective cell 11 in the battery module 1. With the arrangement of the first foam 23, the electrolyte leaked from the explosion-proof valve of the respective cell 11 can be partially blocked and absorbed, reducing the occurrence of electrolyte splashing from some cells onto adjacent cells, which may affect their normal operation. Additionally, the arrangement helps reduce the corrosion of the CCS acquisition component 2 caused by electrolyte leakage, thereby better protecting electrical components and improving the safety of the CCS acquisition component 2 and the overall battery module during use. The first foam 23 includes a body portion 231 and first connecting portions 232. An explosion-proof valve of each cell 11 in the battery module 1 corresponds to a respective first communication opening 233 formed in the body portion 231. Each first connecting portion 232 is disposed inside a first communication opening 233. Each first connecting portion 232 has a connecting end 2321 that is connected to the wall of the first communication opening 233 and a free end 2322 that is spaced from the wall of the first communication opening 233. The free end 2322 can rotate around the connecting end 2321 under the drive of the electrolyte ejected by the explosion-proof valve. For example, the length of the first connecting portion 232 extends along the first direction (the first direction is the X-direction as shown in the figure). One end of the first connecting portion 232 along the first direction is connected to the wall of the first communication opening 233. Both sides of the first connecting portion 232 along the second direction (the second direction is the Y-direction as shown in the figure) are spaced from the wall of the first communication opening 233. This arrangement ensures that the first connecting portion 232 remains connected to the body portion 231, and under the impact of the electrolyte at the moment of the explosion-proof valve's rupture, the free end 2322 can rotate around the connecting end 2321. That is, during the rotation of the first connecting portion 232 around the connecting end 2321, the first connecting portion 232 can block, buffer, and absorb the ejected electrolyte, reducing the occurrence of electrolyte splashing onto other cells 11.

The battery pack also includes a box and a box cover. The box is provided with an accommodation recess. The battery module 1 is disposed in the accommodation recess. The box cover is configured to seal the opening of the accommodation recess. The first foam 23 is disposed between the battery module 1 and the box cover. The first foam 23 can support the box cover, reducing the wobbling of the box cover. Additionally, the first foam 23 has certain elasticity, ensuring that its support for the box cover does not cause sinking or tilting, providing good support.

At least the first connecting portion 232 and the battery module 1 are spaced to form a bypass zone. The bypass zone serves as the blast space for the explosion-proof valve. The bypass zone prevents the first connecting portion 232 from obstructing the explosion-proof valve, thereby avoiding the situation where the valve cannot rupture. This effectively enhances the safety of the cell 11 during use.

In some embodiments, as shown in FIGS. 1, 2, and 3, the CCS acquisition component 2 also includes a fixing plate 24. The busbar 21 is mounted on the fixing plate 24. The explosion-proof valve of each cell corresponds to a respective second communication opening 241 formed in the fixing plate 24. The first foam 23 is disposed on the side of the fixing plate 24 facing away from the battery module 1 and configured to block the second communication opening 241. The fixing plate 24 can be made of an insulating PC board structure. With the fixing plate 24, the installation strength between each busbar 21 and the fixing plate 24 can be enhanced, ensuring the connection strength between the CCS acquisition component 2 and the battery module 1. In other embodiments, the busbar 21 can be pre-installed onto the fixing plate 24, and then the fixing plate 24 is disposed such that the fixing plate 24 is aligned with the battery module 1. This allows for the alignment between all busbars 21 and the cells 11 of the battery module 1 during installation, improving the convenience of installing the CCS acquisition component 2.

As shown in FIGS. 1, 2, and 3, the first foam 23 is disposed on the side of the fixing plate 24 facing away from the battery module 1, that is, between the fixing plate 24 and the box cover. This arrangement effectively enhances the support between the fixing plate 24 and the box cover. Additionally, the first connecting portion 232, when flipped under the impact of the electrolyte, can be stopped by the box cover. This ensures that the first connecting portion 232 can continue absorbing and buffering the electrolyte under the impact, preventing the complete flipping of the first connecting portion 232 and thus preventing the electrolyte from splashing onto the box cover and spilling onto other cells 11. Furthermore, the arrangement of the second communication port 241 provides a bypass space for the explosion of the explosion-proof valve, thereby enhancing the safety of the valve during use.

The CCS acquisition component 2 also includes a second foam 25. The second foam 25 is disposed between the fixing plate 24 and the battery module 1. The explosion-proof valve of each cell corresponds to a respective third communication opening 251 formed in the second foam 25. The respective third communication opening 251 communicates with the respective second communication opening 241. The arrangement of the second foam 25 not only strengthens the connection and support between the battery module 1 and the fixing plate 24, but also absorbs the electrolyte leaked from the cell 11, reducing the risk of electrolyte leakage affecting other cells 11 or the CCS acquisition component 2, thereby lowering the risk of thermal runaway in the battery pack.

The CCS acquisition component 2 also includes cable tie components. The length of the acquisition wiring harness 22 extends along a first direction. The fixing plate 24 is provided with multiple cable tie hole groups spaced apart along the first direction. Each of the multiple cable tie hole groups includes at least two cable tie holes 242 spaced apart along a second direction. The cable tie components are configured to bundle the acquisition wiring harness 22 between two cable tie holes in each of the multiple cable tie hole groups. The first direction and the second direction are arranged at an angle to each other. In this embodiment, each cable tie hole group includes two cable tie holes 242 spaced along the second direction. A cable tie component includes a cable tie. The cable tie is used to pass through the two cable tie holes 242 to bundle the acquisition wiring harness 22 onto the fixing plate 24, enhancing the connection strength of the acquisition wiring harness 22.

A tab of each cell corresponds to a respective fourth communication opening 243 formed in the fixing plate 24. Part of the busbar 21 can pass through the fourth communication opening 243 to connect to the tab. The fourth communication opening 243 facilitates the connection of the busbar 21 to the tab of the cell 11. A positioning slot is disposed on the side of the fixing plate 24 facing the busbar 21. A positioning part protrudes from the side of the busbar 21 facing the fixing plate 24. The positioning part is inserted in the positioning slot. The cooperation between the positioning part and the positioning slot can effectively improve the connection accuracy between the busbar 21 and the fixing plate 24. Additionally, it is not limited to disposing a positioning part on a side of the busbar 21 facing the fixing plate 24 and disposing a positioning slot on the side of the fixing plate 24 facing the busbar 21. It is also feasible to dispose a positioning part on the side of the fixing plate 24 facing the busbar 21and dispose a positioning slot on the side of the busbar 21 facing the fixing plate 24.

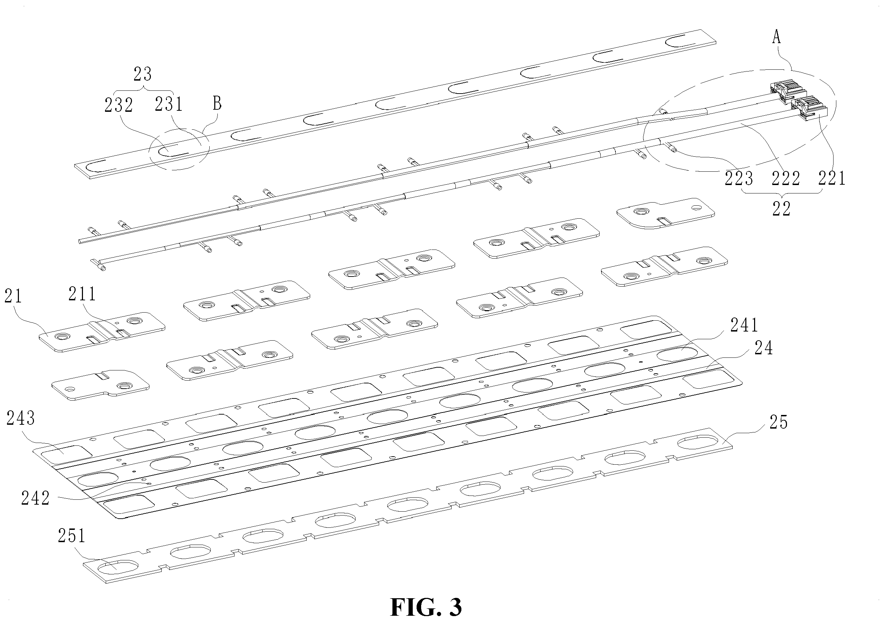

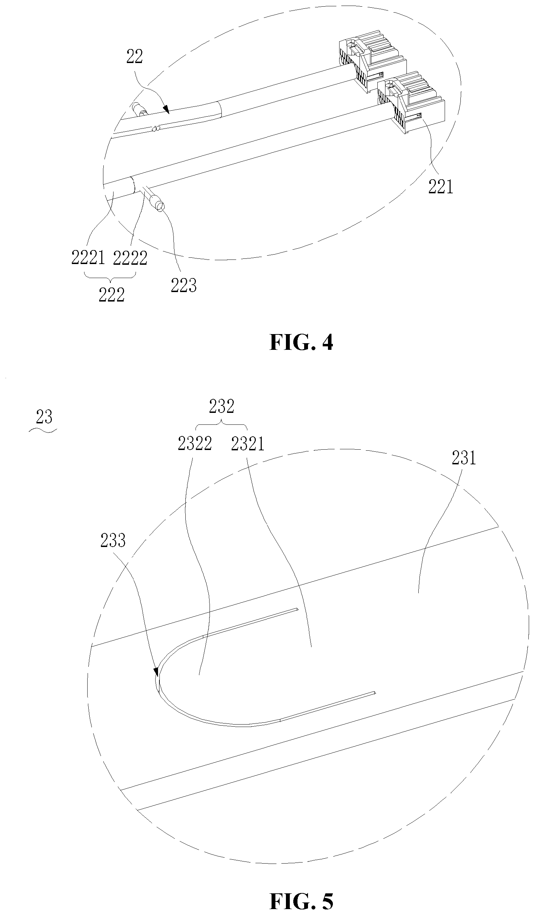

In other embodiments, as shown in FIGS. 3 and 4, the acquisition wiring harness 22 includes at least one connector 221. For each of the at least one connector 221, the connector 221 is connected to an acquisition wiring group. The acquisition wiring group includes multiple acquisition wires 222 arranged in a row. One end of each of the multiple acquisition wires 222 is connected to the connector 221. The other end of each of the multiple acquisition wires 222 is provided with an acquisition terminal 223. The acquisition terminal 223 is connected to the busbar 21. At one end of the acquisition wiring harness 22, a connector 221 having multiple interfaces that are flush with each other is provided, ensuring that all collection wires 222 connected to the connector 221 remain flat. The acquisition wires 222 that have varying lengths are arranged in close contact and side by side. All acquisition terminals 223 are evenly distributed on one side of the acquisition wiring harness 22. This side-by-side wiring manner facilitates the maintenance of the acquisition wiring harness 22. The arrangement based on the acquisition wires 222 without introducing new structures offers a higher economic efficiency.

In this embodiment, the battery module 1 includes multiple cells 11 arranged along the first direction. Each cell 11 includes two tabs spaced along the second direction. That is, the CCS acquisition component 2 is provided with two rows of busbars 21 arranged along the second direction. Thus, the acquisition wiring harness 22 includes two connectors 221 spaced along the second direction. Each connector 221 is connected to the acquisition terminal 223 by the acquisition wire 222 to connect to the same row of busbars 21. This arrangement reduces the entanglement of the acquisition wire 222.

As shown in FIG. 4, each of the multiple acquisition wires 221 includes a body portion 2221, an acquisition portion 2222, and a second connecting portion. The body portion 2221 is connected to the connector 221. The acquisition portion 2222 is connected to the acquisition terminal 223. The acquisition portion 2222 is connected to the body portion 2221 by the second connecting portion. The length of the body portion 2221 extends along a first direction. The length of the acquisition portion 2222 extends along a second direction. The first direction is perpendicular to the second direction. With the arrangement in which the body portion 2221 is perpendicular to the acquisition portion 2222, the length of the acquisition wire 222 from the acquisition terminal 223 to the connector 221 can be maximized. This ensures that the acquisition wire 222 can withstand the pulling force caused by the expansion of the cell 11, to prevent the situation where the data acquisition wire 222 pulls the data acquisition terminal 223 due to the pulling force and causes the data acquisition terminal 223 to detach.. This improves the safety of the acquisition wiring harness 22 during use. The shorter the length of the second connecting portion, the longer the acquisition wire 222 required between the acquisition terminal 223 and the connector 221.

The busbar 21 is recessed with an adhesive slot 211. The acquisition terminal 223 is inserted in the adhesive slot 211. The arrangement of the acquisition terminal 223 in cooperation with the adhesive slot 211 can improve the accuracy of the thermal adhesive injection position when the acquisition terminal 223 is connected to the fixing plate 24 and can reduce the amount of thermal adhesive injected, thereby minimizing the spread of the thermal adhesive. This enhances both the connection strength and the precision of the installation position between the acquisition terminal 223 and the fixing plate 24.

## Claims

1. A battery pack, comprising:
a battery module (1); and
a cells contact system (CCS) acquisition component (2), wherein the CCS acquisition component (2) comprises a busbar (21), an acquisition wiring harness (22), and a first foam (23), the busbar (21) is configured to be connected to the battery module (1), the acquisition wiring harness (22) is connected to the busbar (21), the first foam (23) is disposed on the battery module (1), the first foam (23) comprises a body portion (231) and first connecting portions (232), an explosion-proof valve of each cell in the battery module (1) corresponds to a respective first communication opening (233) formed in the body portion (231), each first connecting portion (232) is disposed inside a first communication opening (233), each first connecting portion (232) has a connecting end (2321) that is connected to a wall of the first communication opening (233) and a free end (2322) that is spaced from the wall of the first communication opening (233), and the free end (2322) is configured to rotate along the connecting end (2321) to buffer and absorb an electrolyte ejected by the explosion-proof valve.

2. The battery pack of claim 1, wherein a bypass zone is formed by a clearance between the first connecting portion (232) and the battery module (1).

3. The battery pack of claim 1 or 2, wherein the CCS acquisition component (2) further comprises a fixing plate (24), the busbar (21) is mounted on the fixing plate (24), the explosion-proof valve of each cell corresponds to a respective second communication opening (241) formed in the fixing plate (24), and the first foam (23) is disposed on a side of the fixing plate (24) facing away from the battery module (1) and configured to block the respective second communication opening (241).

4. The battery pack of claim 3, wherein the CCS acquisition component (2) further comprises a second foam (25), the second foam (25) is disposed between the fixing plate (24) and the battery module (1), the explosion-proof valve of each cell corresponds to a respective third communication opening (251) formed in the second foam (25), and the respective third communication opening (251) communicates with the respective second communication opening (241).

5. The battery pack of claim 3 or 4, wherein the CCS acquisition component (2) further comprises cable tie components, a length of the acquisition wiring harness (22) extends along a first direction, the fixing plate (24) is provided with multiple cable tie hole groups spaced apart along the first direction, each of the multiple cable tie hole groups comprises at least two cable tie holes (242) spaced apart along a second direction, and the cable tie components are configured to bundle the acquisition wiring harness (22) between two cable tie holes in each of the multiple cable tie hole groups, wherein the first direction and the second direction are arranged at an angle to each other.

6. The battery pack of any one of claims 3 to 5, wherein a tab of each cell corresponds to a respective fourth communication opening (243) formed in the fixing plate (24), and a portion of the busbar (21) is configured to pass through the fourth communication opening (243) and be connected to the tab.

7. The battery pack of any one of claims 3 to 6, wherein a positioning part protrudes from one of two adjacent sides of the fixing plate (24) and the busbar (21), a positioning slot is disposed on the other of the two adjacent sides of the fixing plate (24) and the busbar (21), and the positioning part is inserted in the positioning slot.

8. The battery pack of any one of claims 1 to 7, wherein the acquisition wiring harness (22) comprises at least one connector (221), wherein for each of the at least one connector (221), the connector (221) is connected to an acquisition wiring group, the acquisition wiring group comprises multiple acquisition wires (222) arranged in a row, one end of each of the multiple acquisition wires (222) is connected to the connector (221), the other end of each of the multiple acquisition wires (222) is provided with an acquisition terminal (223), and the acquisition terminal (223) is connected to the busbar (21).

9. The battery pack of claim 8, wherein each of the multiple acquisition wires (222) comprises a body portion (2221), an acquisition portion (2222), and a second connecting portion, wherein the body portion (2221) is connected to the connector (221), the acquisition portion (2222) is connected to the acquisition terminal (223), the acquisition portion (2222) is connected to the body portion (2221) by the second connecting portion, a length of the body portion (2221) extends along a first direction, and a length of the acquisition portion (2222) extends along a second direction, wherein the first direction is perpendicular to the second direction.

10. The battery pack of claim 8 or 9, wherein the busbar (21) is recessed with an adhesive slot (211), and the acquisition terminal (223) is inserted in the adhesive slot (211).
